(19) Europäisches Patentamt
European Patent Office
Office européen des brevets

(11) **EP 4 199 152 A1**

(12) **EUROPEAN PATENT APPLICATION**
published in accordance with Art. 153(4) EPC

(43) Date of publication:
**21.06.2023 Bulletin 2023/25**

(21) Application number: **21911581.3**

(22) Date of filing: **23.12.2021**

(51) International Patent Classification (IPC):
**H01M 4/525** (2010.01)   **H01M 4/505** (2010.01)
**H01M 10/052** (2010.01)   **C01G 53/00** (2006.01)

(52) Cooperative Patent Classification (CPC):
**C01G 53/00; H01M 4/505; H01M 4/525;**
**H01M 10/052**

(86) International application number:
**PCT/KR2021/019756**

(87) International publication number:
**WO 2022/139516 (30.06.2022 Gazette 2022/26)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **23.12.2020 KR 20200181726**

(71) Applicant: **Lg Chem, Ltd.**
**Seoul 07336 (KR)**

(72) Inventors:
• **EOM, Jun Ho**
 **Daejeon 34122 (KR)**
• **AHN, Dong Joon**
 **Daejeon 34122 (KR)**

• **LIM, Chae Jin**
 **Daejeon 34122 (KR)**
• **PARK, Na Ri**
 **Daejeon 34122 (KR)**
• **LEE, Jun Won**
 **Daejeon 34122 (KR)**
• **KWAK, No Woo**
 **Daejeon 34122 (KR)**
• **KIM, Ji Hye**
 **Daejeon 34122 (KR)**
• **JUNG, Byoung Hun**
 **Daejeon 34122 (KR)**

(74) Representative: **Hoffmann Eitle**
**Patent- und Rechtsanwälte PartmbB**
**Arabellastraße 30**
**81925 München (DE)**

(54) **POSITIVE ELECTRODE ACTIVE MATERIAL, METHOD FOR MANUFACTURING SAME, POSITIVE ELECTRODE MATERIAL COMPRISING SAME, POSITIVE ELECTRODE, AND LITHIUM SECONDARY BATTERY**

(57)   The present invention relates to a positive electrode active material which includes a lithium composite transition metal oxide represented by Formula 1 described in the present specification and satisfies Equation (1) described in the present specification, wherein an average particle diameter $D_{50}$ of a secondary particle is in a range of 1 um to 8 $\mu$m, a method of preparing the same, and a positive electrode material including the same.

**EP 4 199 152 A1**

[FIG. 1]

**Description**

**TECHNICAL FIELD**

**Cross-reference to Related Applications**

This application claims priority from Korean Patent Application No. 10-2020-0181726, filed on December 23, 2020, the disclosure of which is incorporated by reference herein.

**Technical Field**

The present invention relates to a positive electrode active material and a method of preparing the same, and more particularly, to a positive electrode active material, which is developed to reduce a gas generation amount while minimizing capacity reduction by controlling a grain size, and a method of preparing the same.

**BACKGROUND ART**

Recently, with the rapid spread of electronic devices using batteries, such as mobile phones, notebook computers, and electric vehicles, demand for secondary batteries with relatively high capacity as well as small size and lightweight has been rapidly increased. Particularly, since a lithium secondary battery is lightweight and has high energy density, the lithium secondary battery is in the spotlight as a driving power source for portable devices. Accordingly, research and development efforts for improving the performance of the lithium secondary battery have been actively conducted.

In the lithium secondary battery in a state in which an organic electrolyte solution or a polymer electrolyte solution is filled between a positive electrode and a negative electrode which are respectively formed of active materials capable of intercalating and deintercalating lithium ions, electrical energy is produced by oxidation and reduction reactions when the lithium ions are intercalated/deintercalated into/from the positive electrode and the negative electrode.

Lithium cobalt oxide ($LiCoO_2$), lithium nickel oxide ($LiNiO_2$), lithium manganese oxide ($LiMnO_2$ or $LiMn_2O_4$), or a lithium iron phosphate compound ($LiFePO_4$) has been used as a positive electrode active material of the lithium secondary battery. Among them, the lithium cobalt oxide ($LiCoO_2$) has been widely used because of its high operating voltage and excellent capacity characteristics, and has been used as a positive electrode active material for high voltage. However, due to an increase in the price of cobalt (Co) and supply instability, there is a limitation in using a large amount of the lithium cobalt oxide as a power source for applications such as electric vehicles, and thus, there is a need to develop a positive electrode active material that may replace the lithium cobalt oxide.

Accordingly, a nickel cobalt manganese-based lithium composite transition metal oxide (hereinafter, simply referred to as "NCM-based lithium composite transition metal oxide"), in which a portion of cobalt (Co) is substituted with nickel (Ni) and manganese (Mn), has been developed. However, a conventionally developed NCM-based lithium composite transition metal oxide is generally in the form of a secondary particle in which primary particle are aggregated, wherein, since it has a large specific surface area, low particle strength, and a large amount of lithium by-product, there has been a problem in that an amount of gas generated is large during cell operation and stability is poor.

Particularly, with respect to a high nickel (high-Ni) NCM-based lithium composite transition metal oxide in which an amount of nickel (Ni) is increased to secure high capacity, structural and chemical stability is further reduced, and it is more difficult to secure thermal stability. Thus, various studies have been attempted to reduce the amount of the lithium by-product of the high nickel-based lithium composite transition metal oxide and to improve the stability.

Patent Document 1 discloses a technique for reducing a specific surface area of a positive electrode active material, improving particle strength, and reducing an amount of lithium by-product by increasing a crystal size by adding two or more kinds of dopants and increasing a sintering temperature during preparation of the positive electrode active material. In a case in which the crystal size formed is large as in Patent Document 1, the specific surface area of the positive electrode active material is reduced, and, as a result, since a contact area with an electrolyte solution is reduced, an effect of reducing the amount of gas generated may be obtained, but there is a problem in that capacity characteristics are degraded.

Therefore, there is a need to develop a positive electrode active material having a low gas generation amount as well as excellent capacity characteristics.

(Patent Document 1)

Korean Patent Application Laid-Open Publication No. 10-2020-0047116

## DISCLOSURE OF THE INVENTION

### TECHNICAL PROBLEM

An aspect of the present invention provides a positive electrode active material, which may reduce a gas generation amount while minimizing a reduction in capacity characteristics, and a method of preparing the same.

### TECHNICAL SOLUTION

According to an aspect of the present invention, there is provided a positive electrode active material including a lithium composite transition metal oxide represented by Formula 1 and satisfying Equation (1), wherein an average particle diameter $D_{50}$ of a secondary particle is in a range of 1 um to 8 $\mu$m.

[Formula 1]        $Li_aNi_xCo_yM^1{}_zM^2{}_wO_2$

wherein, in Formula 1, $M^1$ is at least one selected from manganese (Mn) and aluminum (Al), $M^2$ is at least one selected from the group consisting of zirconium (Zr), boron (B), tungsten (W), magnesium (Mg), cerium (Ce), hafnium (Hf), tantalum (Ta), lanthanum (La), titanium (Ti), strontium (Sr), barium (Ba), fluorine (F), phosphorus (P), and sulfur (S), and $0.9 \leq a \leq 1.1$, $0.7 \leq x < 1$, $0 < y \leq 0.2$, $0 < z \leq 0.2$, and $0 \leq w \leq 0.1$.

$$Equation\ (1):\ 4 \leq the\ number\ of\ primary\ particles/the$$

$$average\ particle\ diameter\ D_{50}\ of\ the\ secondary\ particle \leq 21$$

wherein, in Equation (1), the number of primary particles is the number of primary particles which is measured in a cross-sectional scanning electron microscope (SEM) image of the positive electrode active material, and the average particle diameter $D_{50}$ of the secondary particle is a particle diameter at which a maximum peak of area cumulative particle size distribution of the positive electrode active material, which is measured through a laser diffraction particle size measurement instrument, appears.

According to another aspect of the present invention, there is provided a method of preparing a positive electrode active material which includes steps of: mixing a positive electrode active material precursor represented by Formula 2 and a lithium raw material and performing primary sintering to form a pre-sintered product; and performing secondary sintering on the pre-sintered product at a temperature of 800°C to 880°C to form a lithium composite transition metal oxide represented by Formula 1.

[Formula 1]        $Li_aNi_xCo_yM^1{}_zM^2{}_wO_2$

wherein, in Formula 1, $M^1$ is at least one selected from Mn and Al, $M^2$ is at least one selected from the group consisting of Zr, B, W, Mg, Ce, Hf, Ta, La, Ti, Sr, Ba, F, P, and S, and $0.9 \leq a \leq 1.1$, $0.7 \leq x < 1$, $0 < y \leq 0.2$, $0 < z \leq 0.2$, and $0 \leq w \leq 0.1$.

[Formula 2]        $[Ni_xCo_yM^1{}_zM^2{}_w](OH)_2$

wherein, in Formula 2, $M^1$ is at least one selected from Mn and Al, $M^2$ is at least one selected from the group consisting of Zr, B, W, Mg, Ce, Hf, Ta, La, Ti, Sr, Ba, F, P, and S, and $0.7 \leq x < 1$, $0 < y \leq 0.2$, $0 \leq z \leq 0.2$, and $0 \leq w \leq 0.1$.

According to another aspect of the present invention, there is provided a bimodal positive electrode material including a first positive electrode active material and a second positive electrode active material having an average particle diameter $D_{50}$ different from that of the first positive electrode active material. In this case, the first positive electrode active material is the above-described positive electrode active material of the present invention, and the second positive electrode active material may include a lithium composite transition metal oxide represented by Formula 3.

[Formula 3]        $Li_{a'}Ni_{x'}Co_{y'}M^3{}_{z'}M^4{}_{w'}O_2$

wherein, in Formula 3, $M^3$ is at least one selected from Mn and Al, $M^4$ is at least one selected from the group consisting of Zr, B, W, Mg, Ce, Hf, Ta, La, Ti, Sr, Ba, F, P, and S, and $0.9 \leq a' \leq 1.1$, $0.8 \leq x' < 1$, $0 < y' < 0.2$, $0 < z' < 0.2$, and $0 \leq w' < 0.1$.

According to another aspect of the present invention, there is provided a positive electrode including the positive electrode material of the present invention and a lithium secondary battery including the positive electrode.

## ADVANTAGEOUS EFFECTS

A positive electrode active material according to the present invention is characterized in that it includes a high-nickel lithium composite transition metal oxide having an amount of nickel (Ni) among transition metals of 70 atm% or more and the number of aggregated primary particles per 1 um in a cross section of the positive electrode active material is in a range of 4 to 21. The positive electrode active material of the present invention as described above may significantly reduce a gas generation amount while exhibiting excellent capacity characteristics.

Also, the positive electrode active material according to the present invention may be suitably used in a bimodal positive electrode material including two types of positive electrode active materials having different average particle diameters. In a case in which the positive electrode active material according to the present invention is used in the bimodal positive electrode material, particle breakage during rolling may be significantly reduced in comparison to a conventionally used positive electrode active material in the form of a secondary particle while maintaining high capacity characteristics, and, accordingly, gas generation or dissolution of transition metal due to a side reaction with an electrolyte solution may be effectively suppressed.

## BRIEF DESCRIPTION OF THE DRAWINGS

FIG. 1 is a cross-sectional scanning electron microscope (SEM) image of a positive electrode active material prepared by Example 1;
FIG. 2 is a cross-sectional SEM image of a positive electrode active material prepared by Comparative Example 1;
FIG. 3 is a cross-sectional SEM image of a positive electrode active material prepared by Comparative Example 2;
FIG. 4 is a graph illustrating particle size distributions before and after 9 tons pressing of positive electrode active material powder prepared by Example 1;
FIG. 5 is a graph illustrating particle size distributions before and after 9 tons pressing of positive electrode active material powder prepared by Comparative Example 1; and
FIG. 6 is a graph illustrating particle size distributions before and after 9 tons pressing of positive electrode active material powder prepared by Comparative Example 2.

## BEST MODE FOR CARRYING OUT THE INVENTION

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

In the present invention, the expression "primary particle" denotes a smallest particle unit which is distinguished as one body when a cross section of a positive electrode active material is observed through a scanning electron microscope (SEM), wherein it may be composed of a single grain, or may also be composed of a plurality of grains. In the present invention, an average particle diameter of the primary particle may be measured by measuring a size of each particle distinguished from a cross-sectional SEM image of the positive electrode active material particles, and calculating an arithmetic average value thereof.

In the present invention, the expression "secondary particle" denotes a secondary structure formed by aggregation of a plurality of primary particles. An average particle diameter of the secondary particle may be measured using a particle size analyzer, and, in the present invention, Microtrac S3500 was used as the particle size analyzer.

The expression "particle diameter $D_n$" of the positive electrode active material in the present invention denotes a particle diameter at n% of cumulative distribution of area according to the particle diameter. That is, $D_{50}$ is a particle diameter at 50% of the cumulative distribution of area according to the particle diameter, $D_{90}$ is a particle diameter at 90% of the cumulative distribution of area according to the particle diameter, and $D_{10}$ is a particle diameter at 10% of the cumulative distribution of area according to the particle diameter. The $D_n$ may be measured by using a laser diffraction method. Specifically, after dispersing measurement target powder in a dispersion medium, the dispersion medium is introduced into a commercial laser diffraction particle size measurement instrument (e.g., Microtrac S3500) and a particle size distribution is calculated by measuring a difference in diffraction patterns due to a particle size when particles pass through a laser beam. The $D_{10}$, $D_{50}$, and $D_{90}$ may be measured by calculating particle diameters at 10%, 50%, and 90% of the cumulative distribution of area according to the particle diameter using the measurement instrument.

Hereinafter, the present invention will be described in detail.

## Positive Electrode Active Material

A positive electrode active material according to the present invention is characterized in that it includes a high-nickel lithium composite transition metal oxide having an amount of nickel (Ni) among transition metals of 70 atm% or more and the number of aggregated primary particles per 1 um in a cross section of the positive electrode active material is in a range of 4 to 21.

Positive electrode active materials developed so far are in a form of a secondary particle in which hundreds of primary particles are aggregated, wherein the number of aggregated primary particles per 1 um is in a range of 30 to 40. These conventional positive electrode active materials in the form of a secondary particle relatively stably operate when the amount of nickel is low, but, when the amount of nickel is increased to 70 atm% or more, since structural stability is rapidly reduced and an amount of gas generated is rapidly increased, life characteristics are rapidly degraded and stability problems, such as ignition and explosion, may occur.

In order to improve this, positive electrode active materials in a form of a single particle, in which the number of aggregated primary particles is less than 10, have been developed. With respect to the positive electrode active material in the form of a single particle, it was effective in reducing the amount of gas generated, but it was difficult to use it in a high-capacity battery due to poor capacity characteristics.

As a result of a significant amount of research to solve this problem, the present inventors have found that both capacity characteristics and gas generation characteristics of a high-nickel positive electrode active material having a nickel content of 70 atm% or more may be achieved excellently by controlling the number of aggregated primary particles per 1 um in a cross-section of the positive electrode active material particle to be 4 to 21, thereby leading to the completion of the present invention.

Specifically, the positive electrode active material of the present invention includes a lithium composite transition metal oxide represented by the following Formula 1, and satisfies the following Equation (1).

$$[\text{Formula 1}] \qquad \text{Li}_a\text{Ni}_x\text{Co}_y\text{M}^1{}_z\text{M}^2{}_w\text{O}_2$$

In Formula 1, $M^1$ is at least one selected from manganese (Mn) and aluminum (Al), and may be preferably Mn and Al.

$M^2$ may be at least one selected from the group consisting of zirconium (Zr), boron (B), tungsten (W), magnesium (Mg), cerium (Ce), hafnium (Hf), tantalum (Ta), lanthanum (La), titanium (Ti), strontium (Sr), barium (Ba), fluorine (F), phosphorus (P), and sulfur (S), and it is particularly preferable that $M^2$ includes Zr in terms of improving structural stability of the lithium composite transition metal oxide.

a represents a molar ratio of lithium in the lithium composite transition metal oxide, wherein a may satisfy $0.9 \leq a \leq 1.1$, may preferably satisfy $0.95 \leq a \leq 1.08$, and may more preferably satisfy $1 \leq a \leq 1.08$.

x represents a molar ratio of nickel among transition metals in the lithium composite transition metal oxide, wherein x may satisfy $0.7 \leq x < 1$, $0.80 \leq x \leq 0.99$, $0.80 \leq x \leq 0.95$, $0.85 \leq x < 1$, or $0.80 \leq x \leq 0.85$. In a case in which the amount of the nickel satisfies the above range, excellent capacity characteristics may be achieved.

y represents a molar ratio of cobalt among the transition metals in the lithium composite transition metal oxide, wherein y may satisfy $0 < y \leq 0.2$, $0 < y \leq 0.15$, or $0.01 \leq y \leq 0.10$.

z represents a molar ratio of $M^1$ among the transition metals in the lithium composite transition metal oxide, wherein z may satisfy $0 < z < 0.2$, $0 < z \leq 0.15$, or $0.01 \leq z \leq 0.10$.

w represents a molar ratio of $M^2$ among the transition metals in the lithium composite transition metal oxide, wherein w may satisfy $0 \leq w \leq 0.1$ or $0 \leq w \leq 0.05$.

Preferably, the lithium composite transition metal oxide may be represented by Formula 1-1 below.

$$[\text{Formula 1-1}] \qquad \text{Li}_a\text{Ni}_x\text{Co}_y\text{Mn}_{z1}\text{Al}_{z2}\text{M}^2{}_w\text{O}_2$$

In Formula 1-1, definitions of $M^2$, a, x, y, and w are the same as in Formula 1.

z1 represents a molar ratio of Mn among transition metals in the lithium composite transition metal oxide, wherein z1 may satisfy $0 < z1 \leq 0.15$ or $0.01 \leq z1 \leq 0.10$.

z2 represents a molar ratio of Al among the transition metals in the lithium composite transition metal oxide, wherein z2 may satisfy $0 < z2 \leq 0.05$.

In a case in which the lithium composite transition metal oxide including Mn and Al together as in Formula 1-1 is used, a positive electrode active material having relatively excellent structural stability as well as high capacity may be obtained.

The positive electrode active material according to the present invention may further include a coating layer containing at least one element selected from the group consisting of Al, Ti, W, B, F, P, Mg, nickel (Ni), cobalt (Co), iron (Fe), chromium (Cr), vanadium (V), copper (Cu), calcium (Ca), zinc (Zn), Zr, niobium (Nb), molybdenum (Mo), Sr, antimony (Sb), bismuth (Bi), silicon (Si), and S on a surface of the lithium composite transition metal oxide. In terms of improving life characteristics and suppressing an increase in resistance, it is particularly preferable that the coating layer contains a B element.

In a case in which the above-described coating layer is formed on the surface of the lithium composite transition metal oxide, a contact between the lithium composite transition metal oxide and an electrolyte solution is blocked to be able to effectively suppress transition metal dissolution and gas generation due to a side reaction with the electrolyte solution, and structural degradation of the positive electrode active material during charge and discharge may be suppressed by stabilizing a surface structure of the lithium composite transition metal oxide.

The positive electrode active material according to the present invention satisfies the following Equation (1).

$$\text{Equation (1): } 4 \leq \text{ the number of primary particles/average particle diameter } D_{50} \text{ of the secondary particle} \leq 21$$

In Equation (1), the number of primary particles is the number of primary particles which is measured in a cross-sectional SEM image of the positive electrode active material, and the average particle diameter $D_{50}$ of the secondary particle denotes a particle diameter value at a point where a maximum peak of area cumulative particle size distribution of the positive electrode active material, which is measured through a laser diffraction particle size measurement instrument, appears.

The number of primary particles/the average particle diameter of the secondary particle may be in a range of 4 to 21, preferably 5 to 20, and more preferably 6 to 15.

When a value of the number of primary particles/the average particle diameter of the secondary particle satisfies the range of the present invention, a positive electrode active material having both excellent capacity characteristics and gas generation characteristics may be obtained. In a case in which the value of the number of primary particles/the average particle diameter of the secondary particle is less than 4, since a movement distance of lithium ions in the positive electrode active material is increased to reduce lithium ion mobility, capacity is reduced, and, in a case in which the value of the number of primary particles/the average particle diameter of the secondary particle is greater than 21, an effect of reducing an amount of gas generated may not be obtained.

In the positive electrode active material according to the present invention, the number of primary particles, which is measured in the cross-sectional SEM image, may be in a range of 20 to 100, preferably 30 to 100, and more preferably 40 to 95. In a case in which the number of primary particles in a cross section of the positive electrode active material particle is less than 20, the capacity characteristics are degraded, and, in a case in which the number of primary particles in the cross section of the positive electrode active material particle is greater than 100, the effect of reducing the amount of gas generated may not be obtained.

The positive electrode active material according to the present invention may have an average particle diameter $D_{50}$ of the secondary particle of 1 um to 8 $\mu$m, for example, 2 um to 7 um. In a case in which the average particle diameter $D_{50}$ of the secondary particle is less than 1 $\mu$m, a degree of breakage of the secondary particle is reduced, but there is a problem in that life performance is degraded due to an increase in the number of secondary particles and an increase in the exposed primary particles, and, in a case in which the average particle diameter $D_{50}$ of the secondary particle is greater than 8 $\mu$m, there is a problem in that long-term life performance is degraded due to an increase in the breakage of the secondary particle and density of an electrode is reduced when rolled at the same pressure. When the average particle diameter $D_{50}$ of the positive electrode active material satisfies the above range, a positive electrode having high rolling density and a low degree of breakage in an electrode rolling process may be prepared when the positive electrode active material is used in a bimodal positive electrode material.

Also, the positive electrode active material according to the present invention may have a particle size change rate represented by the following Equation (2) of -5 to 4.5, preferably 0 to 4, and more preferably 0 to 3.5.

$$\text{Equation (2): Particle size change rate} = (P_0 - P_1)/P_1$$

In Equation (2), $P_0$ is an intensity of a maximum peak appeared in an area cumulative particle size distribution graph of the positive electrode active material, and $P_1$ is an intensity of a peak appeared in a region corresponding to a particle size at which the $P_0$ peak appears in an area cumulative particle size distribution graph measured after pressurizing the positive electrode active material to 9 tons.

Furthermore, the positive electrode active material according to the present invention may have a particle size change amount represented by the following Equation (3) of 0 to 12, preferably 0 to 10, and more preferably 2 to 10.

$$\text{Equation (3): Particle size change amount} = P_0 - P_1$$

In Equation (3), $P_0$ is the intensity of the maximum peak appeared in the area cumulative particle size distribution graph of the positive electrode active material, and $P_1$ is the intensity of the peak appeared in the region corresponding to the particle size at which the $P_0$ peak appears in the area cumulative particle size distribution graph measured after pressurizing the positive electrode active material to 9 tons.

When the particle size change rate represented by Equation (2) and the particle size change amount represented by Equation (3) satisfy the above ranges, since the particle breakage due to rolling during the preparation of the positive electrode is suppressed, the effect of reducing the amount of gas generated may be further improved.

## Method of Preparing Positive Electrode Active Material

Next, a method of preparing a positive electrode active material according to the present invention will be described.

The method of preparing a positive electrode active material according to the present invention includes the steps of: (1) mixing a positive electrode active material precursor and a lithium raw material and performing primary sintering to form a pre-sintered product, and (2) performing secondary sintering on the pre-sintered product at a temperature of 800°C to 880°C to form a lithium composite transition metal oxide.

First, after a positive electrode active material precursor and a lithium raw material are mixed, primary sintering is performed to form a pre-sintered product.

In this case, the positive electrode active material precursor may be a hydroxide compound represented by Formula 2 below.

[Formula 2] $\quad\quad [Ni_xCo_yM^1_zM^2_w](OH)_2$

In Formula 2, $M^1$ is at least one selected from Mn and Al, and may be preferably Mn.

$M^2$ may be at least one selected from the group consisting of Zr, B, W, Mg, Ce, Hf, Ta, La, Ti, Sr, Ba, F, P, and S.

x represents a molar ratio of nickel in the positive electrode active material precursor, wherein x may satisfy $0.7 \leq x < 1$, $0.80 \leq x \leq 0.99$, $0.80 \leq x \leq 0.95$, $0.85 \leq x < 1$, or $0.80 \leq x \leq 0.85$. In a case in which the amount of the nickel satisfies the above range, excellent capacity characteristics may be achieved.

y represents a molar ratio of cobalt in the positive electrode active material precursor, wherein y may satisfy $0 < y \leq 0.2$, $0 < y < 0.15$, or $0.01 \leq y \leq 0.10$.

z represents a molar ratio of $M^1$ in the positive electrode active material precursor, wherein z may satisfy $0 \leq z < 0.2$, $0 \leq z < 0.15$, or $0.01 \leq z < 0.10$.

w represents a molar ratio of $M^2$ in the positive electrode active material precursor, wherein w may satisfy $0 \leq w \leq 0.1$ or $0 \leq w \leq 0.05$.

Preferably, the positive electrode active material precursor may be a nickel-cobalt-manganese hydroxide represented by Formula 2-1 below.

[Formula 2-1] $\quad\quad [Ni_xCo_yMn_{z1}](OH)_2$

In Formula 2-1, x represents a molar ratio of nickel in the positive electrode active material precursor, wherein x may satisfy $0.7 \leq x < 1$, $0.80 \leq x \leq 0.99$, $0.80 \leq x \leq 0.95$, $0.85 \leq x < 1$, or $0.80 \leq x \leq 0.85$. In a case in which the amount of the nickel satisfies the above range, excellent capacity characteristics may be achieved.

y represents a molar ratio of cobalt in the positive electrode active material precursor, wherein y may satisfy $0 < y \leq 0.2$, $0 < y < 0.15$, or $0.01 \leq y \leq 0.10$.

z1 represents a molar ratio of manganese in the positive electrode active material precursor, wherein z1 may satisfy $0 < z1 < 0.15$ or $0.01 \leq z1 < 0.10$.

As the lithium raw material, lithium-containing sulfates, nitrates, acetic acid salts, carbonates, oxalates, citrates, halides, hydroxides, or oxyhydroxides may be used, and, for example, $Li_2CO_3$, $LiNO_3$, $LiNO_2$, LiOH, $LiOH \cdot H_2O$, LiH,

**EP 4 199 152 A1**

LiF, LiCl, LiBr, LiI, $CH_3COOLi$, $Li_2O$, $Li_2SO_4$, $CH_3COOLi$, $Li_3C_6H_5O_7$, or a mixture thereof may be used.

The lithium raw material and the positive electrode active material precursor may be mixed so that a molar ratio of Li:total transition metals in the precursor is in a range of 1:1 to 1.2:1, for example, 1:1 to 1.1:1. When the mixing ratio of the lithium raw material to the transition metals in the positive electrode active material precursor satisfies the above range, since a crystal structure of the positive electrode active material is well developed, a positive electrode active material having excellent capacity characteristics and structural stability may be prepared.

At least one of an $M^1$-containing raw material and an $M^2$-containing raw material may be additionally mixed if necessary, when the positive electrode active material precursor and the lithium raw material are mixed.

The $M^1$-containing raw material may be $M^1$ element-containing acetic acid salts, nitrates, sulfates, halides, sulfides, hydroxides, oxides, or oxyhydroxides, and, for example, the $M^1$-containing raw material may include $Mn_2O_3$, $MnO_2$, $Mn_3O_4$, $MnCO_3$, $Mn(NO_3)_2$, $MnSO_4$, manganese acetate, manganese chloride, manganese hydroxide, $Al_2O_3$, $Al(OH)_3$, $Al(NO_3)_3 \cdot 9H_2O$, or $Al_2(SO_4)_3$, but is not limited thereto.

The $M^2$-containing raw material may be $M^2$ element-containing acetic acid salts, nitrates, sulfates, halides, sulfides, hydroxides, oxides, or oxyhydroxides.

In the present invention, the $M^1$ element and the $M^2$ element may be added in a co-precipitation reaction step for preparing the positive electrode active material precursor or may be added during the mixing with the lithium raw material. Also, in a case in which two or more types of elements are used as the $M^1$ element and the $M^2$ element, times of the addition of each of the $M^1$ element and the $M^2$ element may be the same or different. For example, in a case in which Mn and Al are included as the $M^1$ element, Mn may be added in the precursor co-precipitation step, and Al may be added in the step of mixing with the lithium raw material.

The times of the addition of the $M^1$ element and the $M^2$ element may be appropriately adjusted in consideration of a final composition of the positive electrode active material to be prepared. For example, in a case of in which a positive electrode active material having a Ni content of greater than 80 atm% is prepared, it is more preferable to add the Al element in the step of mixing with the lithium raw material rather than during the co-precipitation reaction. The reason for this is that, in a case in which Al is added in the co-precipitation step, the Al may adversely affect crystal structure growth.

The positive electrode active material precursor and the lithium raw material are mixed, and, optionally, after at least one of the $M^1$-containing raw material and the $M^2$-containing raw material is further mixed, primary sintering is performed to prepare a pre-sintered product.

The primary sintering is to prevent adverse effect of by-products on the formation of the crystal structure of the positive electrode active material and prepare a positive electrode active material with excellent quality by removing the by-products, such as $CO_2$ or moisture, generated during sintering in advance by pre-sintering the positive electrode active material precursor and the lithium raw material.

The primary sintering is performed at a temperature lower than that of secondary sintering to be described later, and specifically, it is desirable that the primary sintering is performed at a temperature 20°C to 250°C lower than the secondary sintering temperature, for example, at a temperature 40°C to 250°C lower than the secondary sintering temperature. Specifically, the primary sintering may be performed at a temperature of 600°C or higher to less than 800°C, preferably 600°C to 780°C, and more preferably 600°C or higher to 760°C. If the primary sintering temperature is excessively high, since crystal structure transformation occurs in a primary sintering step in which by-products are present, the crystal structure is not well developed, and, if the primary sintering temperature is excessively low, by-product removal efficiency may be reduced.

When the pre-sintered product is formed through the primary sintering, the secondary sintering is performed on the pre-sintered product to form a lithium composite transition metal oxide represented by Formula 1.

In this case, the secondary sintering is performed at a temperature of 800°C to 880°C, for example, at a temperature of 800°C to 860°C. When the secondary sintering temperature satisfies the above range, a positive electrode active material satisfying the range of Equation (1) and having a nickel content of 70 atm% or more may be prepared. If the secondary sintering temperature is less than 800°C during the preparation of the positive electrode active material having a nickel content of 70 atm% or more, a positive electrode active material, in which a ratio of the number of primary particles to the average particle diameter of the secondary particle (the number of primary particles/the average particle diameter of the secondary particle) is greater than 21, is prepared, and, if the secondary sintering temperature is greater than 800°C, a positive electrode active material, in which the ratio of the number of primary particles to the average particle diameter of the secondary particle (the number of primary particles/the average particle diameter of the secondary particle) is less than 4, is prepared.

After the secondary sintering, if necessary, the method may further include a step of washing the lithium composite transition metal oxide represented by Formula 1.

The washing step is to remove a lithium by-product remaining on the surface of the lithium composite transition metal oxide, wherein it may be performed through a method of washing a positive electrode active material which is known in the art. For example, the washing step may be performed by a method in which, after the lithium composite transition metal oxide and a washing solution are mixed, stirred, and then filtered to remove the washing solution, drying is performed. In this case, the drying, for example, may be performed at a temperature of 50°C to 150°C.

Also, after the secondary sintering, if necessary, a step of forming a coating layer on the surface of the lithium composite transition metal oxide may be additionally performed.

The step of forming of the coating layer may be performed by a method of mixing the lithium composite transition metal oxide with a coating raw material and performing a heat treatment.

In this case, the coating raw material may include at least one element selected from the group consisting of Al, Ti, W, B, F, P, Mg, Ni, Co, Fe, Cr, V, Cu, Ca, Zn, Zr, Nb, Mo, Sr, Sb, Bi, Si, and S, and may specifically be acetic acid salts, nitrates, sulfates, halides, sulfides, hydroxides, oxides, or oxyhydroxides which contain the above elements.

The heat treatment during the formation of the coating layer may be performed at a temperature of 200°C to 500°C, for example, 240°C to 400°C.

**Positive Electrode Material**

Next, a positive electrode material according to the present invention will be described.

The positive electrode material according to the present invention is a bimodal positive electrode material which includes the above-described positive electrode active material of the present invention (i.e., the positive electrode active material including the lithium composite transition metal oxide represented by Formula 1 and satisfying Equation (1)), as a first positive electrode active material, and includes a positive electrode active material having an average particle diameter $D_{50}$ different from that of the first positive electrode active material, as a second positive electrode active material. Since the first positive electrode active material is the same as described above, the second positive electrode active material will be described below.

The second positive electrode active material includes a lithium composite transition metal oxide having an amount of nickel among transition metals of 80 atm% or more, and may specifically include a lithium composite transition metal oxide represented by Formula 3 below.

$$[\text{Formula 3}] \qquad Li_a Ni_x Co_y M^3_z M^4_w O_2$$

In Formula 3, $M^3$ is at least one selected from Mn and Al, and may be preferably Mn and Al.

$M^4$ may be at least one selected from the group consisting of Zr, B, W, Mg, Ce, Hf, Ta, La, Ti, Sr, Ba, F, P, and S, and it is particularly preferable that $M^4$ includes Zr in terms of improving structural stability of the lithium composite transition metal oxide.

a' represents a molar ratio of lithium in the lithium composite transition metal oxide, wherein a' may satisfy $0.9 \le a' \le 1.1$, may preferably satisfy $0.95 \le a' \le 1.08$, and may more preferably satisfy $1 \le a' \le 1.08$.

x' represents a molar ratio of nickel among transition metals in the lithium composite transition metal oxide, wherein x' may satisfy $0.8 \le x' < 1$, $0.83 \le x' < 1$, $0.85 \le x' < 1$, or $0.85 \le x' \le 0.95$.

y' represents a molar ratio of cobalt among the transition metals in the lithium composite transition metal oxide, wherein y' may satisfy $0 < y' \le 0.2$, $0 < y' < 0.15$, $0 < y' \le 0.1$, or $0.01 \le y' \le 0.10$.

z' represents a molar ratio of $M^3$ among the transition metals in the lithium composite transition metal oxide, wherein z' may satisfy $0 < z' < 0.2$, $0 < z' < 0.15$, $0 < z' \le 0.1$, or $0.01 \le z' \le 0.10$.

w' represents a molar ratio of $M^4$ among the transition metals in the lithium composite transition metal oxide, wherein w' may satisfy $0 \le w' \le 0.1$, $0 \le w' < 0.1$, or $0 \le w' \le 0.05$.

In the present invention, the first positive electrode active material may have an average particle diameter $D_{50}$ of a secondary particle of 1 um to 8 um, preferably 2 um to 8 $\mu$m, and more preferably 3 um to 8 um, and the second positive electrode active material may have an average particle diameter $D_{50}$ of a secondary particle of greater than 8 um to 30 um or less, preferably 8.5 um to 25 $\mu$m, and more preferably 9 um to 20 $\mu$m.

In a case in which the average particle diameters $D_{50}$ of the secondary particles of the first positive electrode active material and the second positive electrode active material satisfy the above ranges, since the first positive electrode active material particles are filled between the second positive electrode active material particles, a positive electrode having high packing density may be prepared, and the capacity characteristics may be further improved by using the large-diameter second positive electrode active material having a nickel content of 80 atm% or more.

The first positive electrode active material and the second positive electrode active material may be included in a weight ratio of 1:99 to 50:50, preferably 10:90 to 40:60, and more preferably 20:80 to 30:70. When the above mixing ratio is satisfied, the capacity characteristics and the life characteristics are more excellent.

If a positive electrode active material layer is prepared by using the bimodal positive electrode material including two types of the positive electrode active materials having different average particle diameters $D_{50}$, since the small-diameter positive electrode active material having a small average particle diameter is filled between the large-diameter positive electrode active material particles having a large average particle diameter, an electrode with high energy density may be prepared. However, with respect to a conventional bimodal positive electrode material, particle breakage of small-diameter positive electrode active material particles occurred during a positive electrode rolling process to increase a contact area with the electrolyte solution, and, as a result, there was a problem in that an amount of gas generated was increased and life characteristics were degraded.

In order to improve this, a method of using a positive electrode active material in the form of a single particle, which is prepared by increasing the sintering temperature, as the small-diameter positive electrode active material may be considered, but, with respect to the positive electrode active material in the form of a single particle, there is not only a limitation in achieving high capacity due to poor capacity characteristics, but cracks may also be generated in the large-diameter positive electrode active material during the rolling process because particle strength of the small-diameter positive electrode active material is excessively increased.

In contrast, in a case in which the positive electrode active material according to the present invention is used as the small-diameter positive electrode active material of the bimodal positive electrode material, the amount of gas generated may not only be reduced without reducing the capacity, but a side effect, such as occurrence of cracks of the large-diameter positive electrode active material during the rolling process, may also be minimized.

**Positive Electrode**

The present invention provides a positive electrode for a lithium secondary battery which includes the above-described positive electrode material of the present invention.

Specifically, the positive electrode includes a positive electrode collector and a positive electrode active material layer which is disposed on at least one surface of the positive electrode collector and includes the positive electrode material according to the present invention. Since the positive electrode material is the same as described above, other components other than the positive electrode material will be described below.

The positive electrode collector is not particularly limited as long as it has conductivity without causing adverse chemical changes in the battery, and, for example, stainless steel, aluminum, nickel, titanium, fired carbon, or aluminum or stainless steel that is surface-treated with one of carbon, nickel, titanium, silver, or the like may be used. Also, the positive electrode collector may typically have a thickness of 3 um to 500 $\mu$m, and microscopic irregularities may be formed on the surface of the collector to improve the adhesion of the positive electrode active material. The positive electrode collector, for example, may be used in various shapes such as that of a film, a sheet, a foil, a net, a porous body, a foam body, a non-woven fabric body, and the like.

The positive electrode active material layer may include a conductive agent and a binder in addition to the above-described positive electrode material according to the present invention.

The positive electrode material may be included in an amount of 80 wt% to 99 wt%, for example, 85 wt% to 98 wt% based on a total weight of the positive electrode active material layer. When the positive electrode material is included in an amount within the above range, excellent capacity characteristics may be obtained.

The conductive agent is used to provide conductivity to the electrode, wherein any conductive agent may be used without particular limitation as long as it has suitable electron conductivity without causing adverse chemical changes in the battery. Specific examples of the conductive agent may be graphite such as natural graphite or artificial graphite; carbon based materials such as carbon black, acetylene black, Ketjen black, channel black, furnace black, lamp black, thermal black, and carbon fibers; powder or fibers of metal such as copper, nickel, aluminum, and silver; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The conductive agent may be typically included in an amount of 1 wt% to 30 wt% based on the total weight of the positive electrode active material layer.

The binder improves the adhesion between the positive electrode active material particles and the adhesion between the positive electrode active material and the current collector. Specific examples of the binder may be polyvinylidene fluoride (PVDF), polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene monomer (EPDM), a sulfonated EPDM, a styrene-butadiene rubber (SBR), a fluorine rubber, or various copolymers thereof, and any one thereof or a mixture of two or more thereof may be used. The binder may be included in an amount of 1 wt% to 30 wt% based on the total weight of the positive electrode active material layer.

The positive electrode may be prepared according to a typical method of preparing a positive electrode except that the positive electrode material according to the present invention is used. Specifically, a composition for forming a positive electrode active material layer, which is prepared by dissolving or dispersing the above-described positive electrode material as well as optionally the binder and the conductive agent in a solvent, is coated on the positive electrode collector, and the positive electrode may then be prepared by drying and rolling the coated positive electrode collector. In this case, types and amounts of the positive electrode material, the binder, and the conductive agent are the same as those previously described.

The solvent may be a solvent normally used in the art. The solvent may include dimethyl sulfoxide (DMSO), isopropyl alcohol, N-methylpyrrolidone (NMP), acetone, or water, and any one thereof or a mixture of two or more thereof may be used. An amount of the solvent used may be sufficient if the solvent may dissolve or disperse the positive electrode material, the conductive agent, and the binder in consideration of a coating thickness of a slurry and manufacturing yield, and may allow to have a viscosity that may provide excellent thickness uniformity during the subsequent coating for the preparation of the positive electrode.

Also, as another method, the positive electrode may be prepared by casting the composition for forming a positive electrode active material layer on a separate support and then laminating a film separated from the support on the positive electrode collector.

## Lithium Secondary Battery

Furthermore, in the present invention, an electrochemical device including the positive electrode may be prepared. The electrochemical device may specifically be a battery or a capacitor, and, for example, may be a lithium secondary battery.

The lithium secondary battery specifically includes a positive electrode, a negative electrode disposed to face the positive electrode, a separator disposed between the positive electrode and the negative electrode, and an electrolyte. Since the positive electrode is the same as described above, detailed descriptions thereof will be omitted, and the remaining configurations will be only described in detail below.

Also, the lithium secondary battery may further optionally include a battery container accommodating an electrode assembly of the positive electrode, the negative electrode, and the separator, and a sealing member sealing the battery container.

In the lithium secondary battery, the negative electrode includes a negative electrode collector and a negative electrode active material layer disposed on the negative electrode collector.

The negative electrode collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. Also, the negative electrode collector may typically have a thickness of 3 um to 500 $\mu$m, and, similar to the positive electrode collector, microscopic irregularities may be formed on the surface of the collector to improve the adhesion of a negative electrode active material. The negative electrode collector, for example, may be used in various shapes such as that of a film, a sheet, a foil, a net, a porous body, a foam body, a non-woven fabric body, and the like.

The negative electrode active material layer optionally includes a binder and a conductive agent in addition to the negative electrode active material.

A compound capable of reversibly intercalating and deintercalating lithium may be used as the negative electrode active material. Specific examples of the negative electrode active material may be a carbonaceous material such as artificial graphite, natural graphite, graphitized carbon fibers, and amorphous carbon; a metallic compound alloyable with lithium such as silicon (Si), aluminum (Al), tin (Sn), lead (Pb), zinc (Zn), bismuth (Bi), indium (In), magnesium (Mg), gallium (Ga), cadmium (Cd), a Si alloy, a Sn alloy, or an Al alloy; a metal oxide which may be doped and undoped with lithium such as $SiO_\beta(0<\beta<2)$, $SnO_2$, vanadium oxide, and lithium vanadium oxide; or a composite including the metallic compound and the carbonaceous material such as a Si-C composite or a Sn-C composite, and any one thereof or a mixture of two or more thereof may be used. Also, a metallic lithium thin film may be used as the negative electrode active material. Furthermore, both low crystalline carbon and high crystalline carbon may be used as the carbon material. Typical examples of the low crystalline carbon may be soft carbon and hard carbon, and typical examples of the high crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature sintered carbon such as petroleum or coal tar pitch derived cokes.

The negative electrode active material may be included in an amount of 80 wt% to 99 wt% based on a total weight of the negative electrode active material layer.

The binder is a component that assists in the binding between the conductive agent, the active material, and the current collector, wherein the binder is typically added in an amount of 0.1 wt% to 10 wt% based on the total weight of the negative electrode active material layer. Examples of the binder may be polyvinylidene fluoride (PVDF), polyvinyl alcohol, carboxymethylcellulose (CMC), starch, hydroxypropylcellulose, regenerated cellulose, polyvinylpyrrolidone, tetrafluoroethylene, polyethylene, polypropylene, an ethylene-propylene-diene polymer (EPDM), a sulfonated-EPDM, a styrene-butadiene rubber, a fluoro rubber, and various copolymers thereof.

The conductive agent is a component for further improving conductivity of the negative electrode active material, wherein the conductive agent may be added in an amount of 10 wt% or less, for example, 5 wt% or less based on the total weight of the negative electrode active material layer. The conductive agent is not particularly limited as long as it has conductivity without causing adverse chemical changes in the battery, and, for example, a conductive material such as: graphite such as natural graphite or artificial graphite; carbon black such as acetylene black, Ketjen black, channel black, furnace black, lamp black, and thermal black; conductive fibers such as carbon fibers or metal fibers; metal powder such as fluorocarbon powder, aluminum powder, and nickel powder; conductive whiskers such as zinc oxide whiskers and potassium titanate whiskers; conductive metal oxide such as titanium oxide; or polyphenylene derivatives may be used.

For example, the negative electrode active material layer may be prepared by coating a composition for forming a negative electrode active material layer, which is prepared by dissolving or dispersing optionally the binder and the conductive agent as well as the negative electrode active material in a solvent, on the negative electrode collector and drying the coated negative electrode collector, or may be prepared by casting the composition for forming a negative electrode active material layer on a separate support and then laminating a film separated from the support on the negative electrode collector.

In the lithium secondary battery, the separator separates the negative electrode and the positive electrode and provides a movement path of lithium ions, wherein any separator may be used as the separator without particular limitation as long as it is typically used in a lithium secondary battery, and particularly, a separator having high moisture-retention ability for an electrolyte as well as low resistance to the transfer of electrolyte ions may be used. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

Also, the electrolyte used in the present invention may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto.

Specifically, the electrolyte may include an organic solvent and a lithium salt.

Any organic solvent may be used as the organic solvent without particular limitation so long as it may function as a medium through which ions involved in an electrochemical reaction of the battery may move. Specifically, an ester-based solvent such as methyl acetate, ethyl acetate, $\gamma$-butyrolactone, and $\varepsilon$-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond aromatic ring or ether bond); amides such as dimethylformamide; dioxolanes such as 1,3-dioxolane; or sulfolanes may be used as the organic solvent. Among these solvents, the carbonate-based solvent may be used, and, for example, a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) may be used.

The lithium salt may be used without particular limitation as long as it is a compound capable of providing lithium ions used in the lithium secondary battery. Specifically, $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiCl$, $LiI$, or $LiB(C_2O_4)_2$ may be used as the lithium salt. The lithium salt may be used in a concentration range of 0.1 M to 2.0 M. In a case in which the concentration of the lithium salt is included within the above range, since the electrolyte may have appropriate conductivity and viscosity, excellent performance of the electrolyte may be obtained and lithium ions may effectively move.

As described above, since the lithium secondary battery including the positive electrode active material according to the present invention stably exhibits excellent discharge capacity, output characteristics, and capacity retention, the lithium secondary battery is suitable for portable devices, such as mobile phones, notebook computers, and digital cameras, and electric cars such as hybrid electric vehicles (HEVs).

Thus, according to another embodiment of the present invention, a battery module including the lithium secondary battery as a unit cell and a battery pack including the battery module are provided.

The battery module or the battery pack may be used as a power source of at least one medium and large sized device of a power tool; electric cars including an electric vehicle (EV), a hybrid electric vehicle, and a plug-in hybrid electric vehicle (PHEV); or a power storage system.

A shape of the lithium secondary battery of the present invention is not particularly limited, but a cylindrical type using a can, a prismatic type, a pouch type, or a coin type may be used.

The lithium secondary battery according to the present invention may not only be used in a battery cell that is used as a power source of a small device, but may also be used as a unit cell in a medium and large sized battery module including a plurality of battery cells.

## MODE FOR CARRYING OUT THE INVENTION

Hereinafter, the present invention will be described in detail, according to specific examples. The invention may, however, be embodied in many different forms and should not be construed as being limited to the embodiments set forth herein. Rather, these example embodiments are provided so that this description will be thorough and complete, and will fully convey the scope of the present invention to those skilled in the art.

### Example 1

After a $LiOH \cdot H_2O$ lithium raw material and a $Ni_{0.83}Co_{0.05}Mn_{0.12}(OH)_2$ positive electrode active material precursor ($D_{50}$=4.6 $\mu$m) were mixed so that a molar ratio of Li : transition metals (Ni+Co+Mn) in the precursor was 1.06 : 1 and $ZrO_2$ and $Al(OH)_3$ were additionally mixed, sintering was performed at 640°C for 5 hours to prepare a pre-sintered product. In this case, the $ZrO_2$ was mixed in an amount such that a concentration of Zr was 3,500 ppm based on a total weight of the pre-sintered product, and the $Al(OH)_3$ was mixed in an amount such that a concentration of Al was 2 mol% based on the total number of moles of Ni, Co, Mn, and Al. Then, secondary sintering was performed on the pre-sintered product at 830°C to prepare a $LiNi_{0.81}Co_{0.05}Mn_{0.12}Al_{0.02}O_2$ lithium composite transition metal oxide containing Zr.

200 g of the lithium composite transition metal oxide prepared as described above and 240 g of water were mixed and washed by stirring for 5 minutes, and thereafter, the mixture was separation filtered with a filter press so that a water content in the washed product was in a range of 5% to 10% and then dried at 130°C. Then, the washed and dried lithium composite transition metal oxide and $H_3BO_3$ were mixed in a weight ratio of 100 : 0.57, and heat-treated at 300°C for 4 hours to prepare a positive electrode active material on which a B solid solution was coated.

### Example 2

A positive electrode active material was prepared in the same manner as in Example 1 except that secondary sintering was performed at 800°C.

### Example 3

A positive electrode active material was prepared in the same manner as in Example 1 except that secondary sintering was performed at 850°C.

### Comparative Example 1

A positive electrode active material was prepared in the same manner as in Example 1 except that secondary sintering was performed at 780°C.

### Comparative Example 2

A positive electrode active material was prepared in the same manner as in Example 1 except that secondary sintering was performed at 900°C.

### Comparative Example 3

A positive electrode active material was prepared in the same manner as in Example 1 except that a positive electrode active material precursor having an average particle diameter ($D_{50}$) of a secondary particle was 8.5 $\mu$m.

### Experimental Example 1

After 0.5 g of each of the positive electrode active material powders prepared in Examples 1 to 3 and Comparative Examples 1 to 3 was dispersed in water to which a small amount of sodium hexametaphosphate (($NaPO_3)_6$) was added, an average particle diameter $D_{50}$ of a secondary particle of each positive electrode active material was measured using a laser diffraction particle size measurement instrument (Microtrac S-3500). Measurement results are presented in Table 1.

Also, after 10 g of positive electrode active material particles were collected from each of the positive electrode active material powders prepared in Examples 1 to 3 and Comparative Examples 1 to 3 and cross-sections thereof were cut using an ion milling system (Hitachi, Ltd., IM4000), cross-sectional SEM images were obtained using a scanning electron microscope. The obtained cross-sectional SEM images were analyzed to measure the number of primary particles in the cross-section of each positive electrode active material, and an average value thereof was calculated. Measurement results are presented in Table 1.

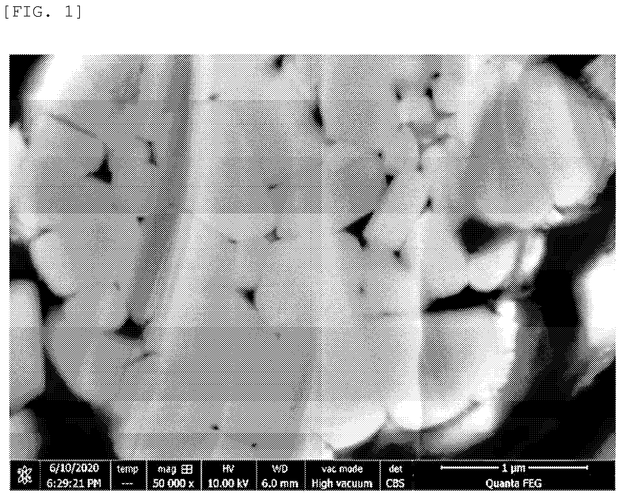

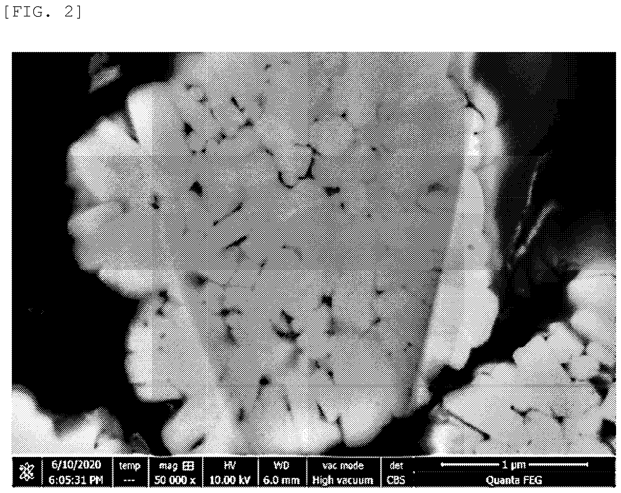

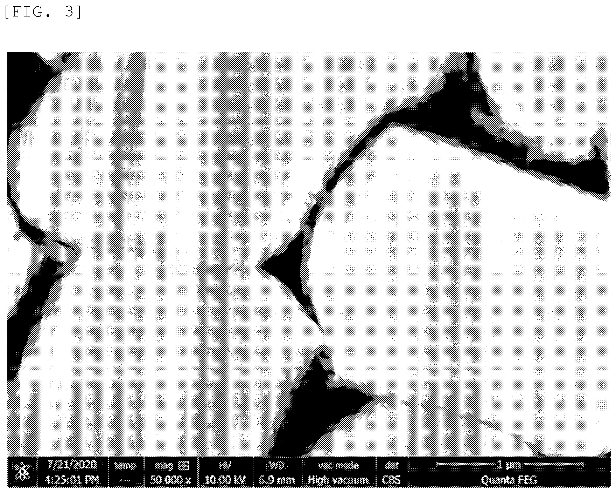

Furthermore, a cross-sectional SEM image of a sample collected from the positive electrode active material powder of Example 1 is illustrated in FIG. 1, a cross-sectional SEM image of a sample collected from the positive electrode active material powder of Comparative Example 1 is illustrated in FIG. 2, and a cross-sectional SEM image of a sample collected from the positive electrode active material powder of Comparative Example 2 is illustrated in FIG. 3.

[Table 1]

| | $D_{50}$ ($\mu$m) | The number of primary particles in the cross section | The number of primary particles/$D_{50}$ |
|---|---|---|---|
| Example 1 | 4.93 | 75 | 15.21 |
| Example 2 | 4.85 | 95 | 19.58 |
| Example 3 | 5.35 | 41 | 7.66 |
| Comparative Example 1 | 4.66 | 136 | 29.18 |
| Comparative Example 2 | 4.87 | 3 | 0.61 |
| Comparative Example 3 | 8.23 | 128 | 15.55 |

**Experimental Example 2 - Measurement of Particle Size Change Rate and Particle Size Change Amount**

After 0.5 g of each of the positive electrode active material powders prepared in Examples 1 to 3 and Comparative Examples 1 to 3 was dispersed in water to which a small amount of sodium hexametaphosphate (($NaPO_3)_6$) was added, an area cumulative particle size distribution of secondary particles of each positive electrode active material was measured using a laser diffraction particle size measurement instrument (Microtrac S-3500) .

Then, after 2 g of the positive electrode active material powder was collected and pressed at a pressure of 9 tons, the pressed positive electrode active material powder was dispersed in water to which a small amount of sodium hexametaphosphate (($NaPO_3)_6$) was added, and an area cumulative particle size distribution of the secondary particles of the positive electrode active material after the 9 tons pressing was then measured using a laser diffraction particle size measurement instrument (Microtrac S-3500) .

A particle size change rate represented by the following Equation (2) and a particle size change amount represented by Equation (3) were calculated by using the particle size distribution measurement results before and after the pressing.

$$\text{Equation (2): Particle size change rate} = (P_0 - P_1)/P_1$$

$$\text{Equation (3): Particle size change amount} = P_0 - P_1$$

In Equation (2) and Equation (3), $P_0$ is an intensity of a maximum peak appeared in an area cumulative particle size distribution graph of the positive electrode active material, and $P_1$ is an intensity of a peak appeared in a region corresponding to a particle diameter of the $P_0$ peak in an area cumulative particle size distribution graph measured after pressurizing the positive electrode active material to 9 tons.

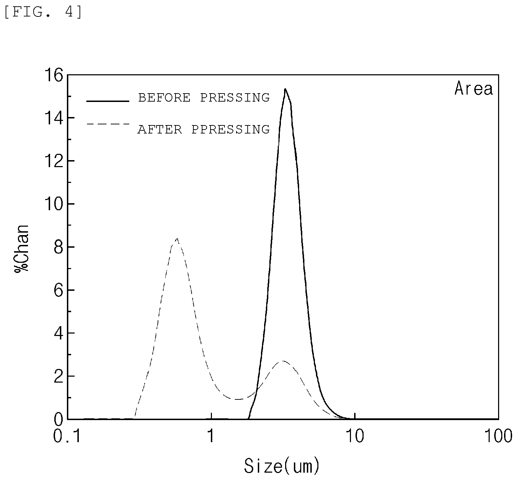

Measurement results are presented in Table 2 and FIGS. 4 through 6 below.

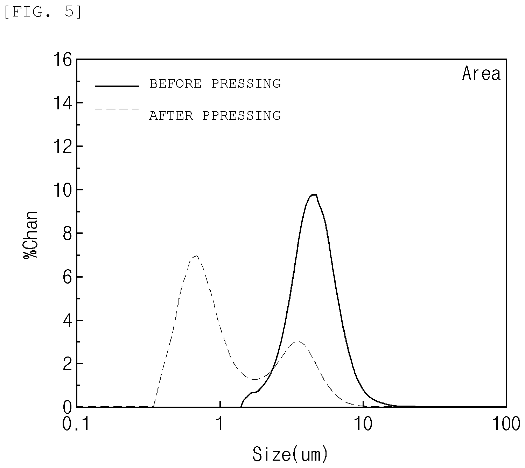

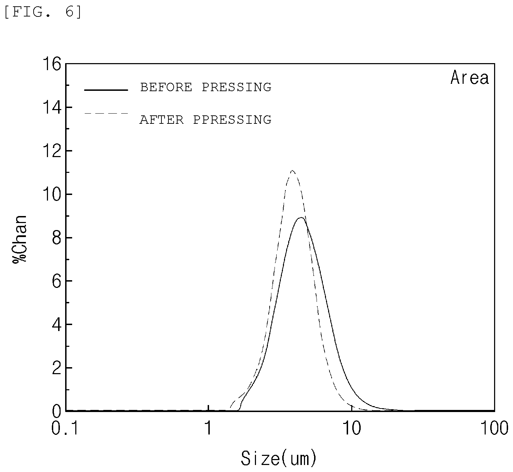

A graph showing the area cumulative particle size distributions before and after the pressing of the positive electrode active material powder of Example 1 is illustrated in FIG. 4, a graph showing the area cumulative particle size distributions before and after the pressing of the positive electrode active material powder of Comparative Example 1 is illustrated in FIG. 5, and a graph showing the area cumulative particle size distributions before and after the pressing of the positive electrode active material powder of Comparative Example 2 is illustrated in FIG. 6.

[Table 2]

| | $P_0$(%) | $P_1$(%) | Particle size change amount ($P_0$ - $P_1$) | Particle size change rate ($P_0$ - $P_1$) / $P_1$ |
|---|---|---|---|---|
| Example 1 | 9.79 | 3.02 | 6.77 | 2.24 |
| Example 2 | 13.52 | 2.99 | 10.53 | 3.52 |
| Example 3 | 9.42 | 3.75 | 5.67 | 1.51 |
| Comparative Example 1 | 15.37 | 2.72 | 12.65 | 4.65 |
| Comparative Example 2 | 8.91 | 11.12 | -2.21 | -13.33 |
| Comparative Example 3 | 15.32 | 2.91 | 12.41 | 4.26 |

**Experimental Example 3 - Capacity Characteristics Evaluation**

Each of the positive electrode active materials prepared in Examples 1 to 3 and Comparative Examples 1 to 3 and a $LiNi_{0.86}Co_{0.05}Mn_{0.07}Al_{0.02}O_2$ positive electrode active material containing 3,500 ppm of Zr and having an average particle diameter $D_{50}$ of 10 um were mixed in a weight ratio of 2:8 to prepare a positive electrode material.

The positive electrode material, a conductive agent (Denka Black), and a binder (PVDF) were mixed in an N-methyl-2-pyrrolidone (NMP) solvent at a weight ratio of 97.5:1.15:1.35 to prepare a positive electrode slurry. An aluminum current collector was coated with the positive electrode slurry, dried, and then rolled to prepare a positive electrode.

A lithium metal electrode was used as a negative electrode.

Each lithium secondary battery was prepared by preparing an electrode assembly by disposing a separator between the positive electrode and the negative electrode, disposing the electrode assembly in a battery case, and then injecting an electrolyte solution. In this case, as the electrolyte solution, an electrolyte solution, in which 1 M $LiPF_6$ was dissolved in an organic solvent in which ethylene carbonate:ethyl methyl carbonate:diethyl carbonate were mixed in a volume ratio of 3:3:4, was used.

Each of the lithium secondary batteries thus prepared was charged at a constant current of 0.1 C to 4.25 V in a constant current/constant voltage (CC/CV) mode at 25°C (CV 0.05 C), and then discharged to 3 V in a CC mode to measure initial discharge capacity (unit: mAh/g) and capacity efficiency (unit: %). Measurement results are presented in Table 3.

[Table 3]

| | Discharge capacity (mAh/g) | Capacity efficiency (%) |
|---|---|---|
| Example 1 | 212.5 | 92.5 |
| Example 2 | 212.5 | 92.6 |
| Example 3 | 212.0 | 92.4 |
| Comparative Example 1 | 212.9 | 92.8 |
| Comparative Example 2 | 204.0 | 90.8 |
| Comparative Example 3 | 208.3 | 91.5 |

**Experimental Example 4 - Evaluation of Gas Generation Amount**

Each of the positive electrode active materials prepared in Examples 1 to 3 and Comparative Examples 1 to 3 and a $LiNi_{0.86}Co_{0.05}Mn_{0.07}Al_{0.02}O_2$ positive electrode active material containing 3,500 ppm of Zr and having an average particle diameter $D_{50}$ of 10 um were mixed in a weight ratio of 2:8 to prepare a positive electrode material.

The positive electrode material, a conductive agent (Denka Black), and a binder (PVDF) were mixed in an N-methyl-2-pyrrolidone (NMP) solvent at a weight ratio of 97.5:1.15:1.35 to prepare a positive electrode slurry. An aluminum current collector was coated with the positive electrode slurry, dried, and then rolled to prepare a positive electrode.

Next, a negative electrode active material (natural graphite), a conductive agent (carbon black), and a binder (SBR+CMC) were mixed in water at a weight ratio of 95:1.5:3.5 to prepare a negative electrode slurry. A copper current collector was coated with the negative electrode slurry, dried, and then rolled to prepare a negative electrode.

Three mono-cells having an electrode size of 3 cm × 4 cm each were prepared by preparing an electrode assembly by disposing a separator between the positive electrode and the negative electrode, disposing the electrode assembly in a battery case, and then injecting an electrolyte solution. In this case, as the electrolyte solution, an electrolyte solution, in which 1 M $LiPF_6$ was dissolved in an organic solvent in which ethylene carbonate:ethyl methyl carbonate:diethyl carbonate were mixed in a volume ratio of 3:3:4, was used.

After the three mono-cells were charged at a constant current of 0.33 C to 4.25 V at 45°C and cut-off charged at 0.05 C, the positive electrodes were separated. The separated positive electrodes were put in a cell pouch, and, after an electrolyte solution was additionally injected, the cell pouch was sealed to prepare a sample. A cell volume change rate (unit: %) and a gas generation amount (unit: pi) were measured while the sample was stored at 60°C for 4 weeks. Measurement results are presented in Table 4 and Table 5.

[Table 4]

| Cell volume change rate (%) | 0 week | 1 week | 2 weeks | 3 weeks | 4 weeks |
|---|---|---|---|---|---|
| Example 1 | 0 | 6.81 | 9.33 | 11.73 | 13.08 |
| Example 2 | 0 | 7.12 | 10.58 | 12.93 | 15.01 |
| Example 3 | 0 | 6.97 | 8.99 | 11.42 | 12.15 |
| Comparative Example 1 | 0 | 12.32 | 16.02 | 19.67 | 22.60 |
| Comparative Example 2 | 0 | 5.51 | 8.28 | 10.12 | 11.05 |
| Comparative Example 3 | 0 | 10.22 | 15.27 | 18.95 | 23.54 |

[Table 5]

| Gas generation amount ($\mu\ell$) | $H_2$ | CO | $CO_2$ | $CH_4$ | $C_2H_4$ |
|---|---|---|---|---|---|
| Example 1 | 1 | 7 | 48 | 2 | 2 |
| Example 2 | 2 | 7 | 53 | 2 | 2 |
| Example 3 | 2 | 6 | 46 | 1 | 1 |
| Comparative Example 1 | 2 | 9 | 66 | 2 | 2 |
| Comparative Example 2 | 1 | 5 | 40 | 2 | 1 |
| Comparative Example 3 | 2 | 8 | 70 | 1 | 2 |

As illustrated in Tables 3 to 5, with respect to Examples 1 to 3 in which the positive electrode active material of the present invention was used, both capacity characteristics and an effect of reducing gas generation were excellent. In contrast, Comparative Example 1 had excellent capacity characteristics but had a large gas generation amount, Comparative Example 2 had significantly low capacity characteristics, and Comparative Example 3 had a limitation in that capacity characteristics were low and a gas generation amount was large.

**Claims**

1. A positive electrode active material comprising a lithium composite transition metal oxide represented by Formula 1, and

    satisfying Equation (1),
    wherein an average particle diameter $D_{50}$ of a secondary particle is in a range of 1 um to 8 $\mu$m:

        [Formula 1]        $Li_aNi_xCo_yM^1_zM^2_wO_2$

wherein, in Formula 1, $M^1$ is at least one selected from the group consisting of manganese (Mn) and aluminum (Al), $M^2$ is at least one selected from the group consisting of zirconium (Zr), boron (B), tungsten (W), magnesium (Mg), cerium (Ce), hafnium (Hf), tantalum (Ta), lanthanum (La), titanium (Ti), strontium (Sr), barium (Ba), fluorine (F), phosphorus (P), and sulfur (S), and

$0.9 \leq a \leq 1.1$, $0.7 \leq x < 1$, $0 < y \leq 0.2$, $0 < z \leq 0.2$, and $0 \leq w \leq 0.1$, and

$$\text{Equation (1): } 4 \leq a \text{ number of primary particles/an average particle diameter } D_{50} \text{ of the secondary particle} \leq 21$$

wherein, in Equation (1), the number of primary particles is measured in a cross-sectional scanning electron microscope (SEM) image of the positive electrode active material, and the average particle diameter $D_{50}$ of the secondary particle is a particle diameter at which a maximum peak of area cumulative particle size distribution of the positive electrode active material, which is measured through a laser diffraction particle size measurement instrument.

2. The positive electrode active material of claim 1, wherein the lithium composite transition metal oxide is represented by Formula 1-1:

[Formula 1-1]            $Li_a Ni_x Co_y Mn_{z1} Al_{z2} M^2_w O_2$

wherein, in Formula 1-1, $M^2$ is at least one selected from the group consisting of Zr, B, W, Mg, Ce, Hf, Ta, La, Ti, Sr, Ba, F, P, and S, and

$0.9 \leq a \leq 1.1$, $0.7 \leq x < 1$, $0 < y \leq 0.2$, $0 < z1 \leq 0.15$, $0 < z2 \leq 0.05$, and $0 \leq w \leq 0.1$.

3. The positive electrode active material of claim 1, wherein the number of primary particles, which is measured in the cross-sectional SEM image of the positive electrode active material, is in a range of 20 to 100.

4. The positive electrode active material of claim 1, wherein the positive electrode active material has a particle size change rate represented by Equation (2) of -5 to 4.5:

$$\text{Equation (2): Particle size change rate} = (P_0 - P_1)/P_1$$

wherein, in Equation (2),

$P_0$ is an intensity of a maximum peak appeared in an area cumulative particle size distribution graph of the positive electrode active material, and
$P_1$ is an intensity of a peak appeared in a region corresponding to a particle diameter of the $P_0$ peak in an area cumulative particle size distribution graph measured after pressurizing the positive electrode active material to 9 tons.

5. The positive electrode active material of claim 1, wherein the positive electrode active material has a particle size change amount represented by Equation (3) of 0 to 12:

$$\text{Equation (3): Particle size change amount} = P_0 - P_1$$

wherein, in Equation (3),

$P_0$ is an intensity of a maximum peak appeared in an area cumulative particle size distribution graph of the positive electrode active material, and
$P_1$ is an intensity of a peak appeared in a region corresponding to a particle diameter of the $P_0$ peak in an area cumulative particle size distribution graph measured after pressurizing the positive electrode active material to 9 tons.

6. The positive electrode active material of claim 1, further comprising a coating layer which is formed on a surface of the lithium composite transition metal oxide and contains at least one element selected from the group consisting of Al, Ti, W, B, F, P, Mg, nickel (Ni), cobalt (Co), iron (Fe), chromium (Cr), vanadium (V), copper (Cu), calcium (Ca), zinc (Zn), Zr, niobium (Nb), molybdenum (Mo), Sr, antimony (Sb), bismuth (Bi), silicon (Si), and S.

7. A method of preparing the positive electrode active material of claim 1, the method comprising :

mixing a positive electrode active material precursor represented by Formula 2 and a lithium raw material and performing primary sintering to form a pre-sintered product; and
performing secondary sintering on the pre-sintered product at a temperature of 800°C to 880°C to form a lithium composite transition metal oxide represented by Formula 1:

[Formula 1]      $Li_aNi_xCo_yM^1_zM^2_wO_2$

wherein, in Formula 1, $M^1$ is at least one selected from the group consisting of manganese (Mn) and aluminum (Al), $M^2$ is at least one selected from the group consisting of zirconium (Zr), boron (B), tungsten (W), magnesium (Mg), cerium (Ce), hafnium (Hf), tantalum (Ta), lanthanum (La), titanium (Ti), strontium (Sr), barium (Ba), fluorine (F), phosphorus (P), and sulfur (S), and
$0.9 \leq a \leq 1.1$, $0.7 \leq x < 1$, $0 < y \leq 0.2$, $0 < z \leq 0.2$, and $0 \leq w \leq 0.1$, and

[Formula 2]      $[Ni_xCo_yM^1_zM^2_w](OH)_2$

wherein, in Formula 2, $M^1$ is at least one selected from the group consisting of Mn and Al, $M^2$ is at least one selected from the group consisting of Zr, B, W, Mg, Ce, Hf, Ta, La, Ti, Sr, Ba, F, P, and S, and $0.7 \leq x < 1$, $0 < y \leq 0.2$, $0 \leq z \leq 0.2$, and $0 \leq w \leq 0.1$.

8. The method of claim 7, wherein the positive electrode active material precursor is represented by Formula 2-1:

[Formula 2-1]      $[Ni_xCo_yMn_{z1}](OH)_2$

wherein, in Formula 2-1, $0.7 \leq x < 1$, $0 < y \leq 0.2$, and $0 < z1 \leq 0.15$.

9. The method of claim 7, wherein at least one selected from the group consisting of a $M^1$-containing raw material and a $M^2$-containing raw material is further mixed during the primary sintering,

wherein $M^1$ is at least one selected from Mn and Al,, and
$M^2$ is at least one selected from the group consisting of Zr, B, W, Mg, Ce, Hf, Ta, La, Ti, Sr, Ba, F, P, and S.,

10. The method of claim 7, wherein the primary sintering is performed at a temperature 20°C to 250°C lower than the secondary sintering temperature.

11. The method of claim 10, wherein the primary sintering is performed at a temperature of 600°C or higher to less than 800°C.

12. The method of claim 7, further comprising, after the secondary sintering, at least one step of

washing the lithium composite transition metal oxide represented by Formula 1, or
forming a coating layer by mixing the lithium composite transition metal oxide represented by Formula 1 with a coating raw material containing at least one element selected from the group consisting of Al, Ti, W, B, F, P, Mg, nickel (Ni), cobalt (Co), iron (Fe), chromium (Cr), vanadium (V), copper (Cu), calcium (Ca), zinc (Zn), Zr, niobium (Nb), molybdenum (Mo), Sr, antimony (Sb), bismuth (Bi), silicon (Si), and S and performing a heat treatment.

13. The method of claim 12, wherein the heat treatment in the forming the coating layer is performed at a temperature of 200°C to 500°C.

14. A positive electrode material which is a bimodal positive electrode material comprising:

a first positive electrode active material and a second positive electrode active material having an average

particle diameter $D_{50}$ different from that of the first positive electrode active material,
wherein the first positive electrode active material is the positive electrode active material of claim 1, and
the second positive electrode active material comprises a lithium composite transition metal oxide represented by Formula 3:

[Formula 3] $\qquad$ $Li_{a'}Ni_{x'}Co_{y'}M^3_{z'}M^4_{w'}O_2$

wherein, in Formula 3, $M^3$ is at least one selected from the group consisting of manganese (Mn) and aluminum (Al), $M^4$ is at least one selected from the group consisting of zirconium (Zr), boron (B), tungsten (W), magnesium (Mg), cerium (Ce), hafnium (Hf), tantalum (Ta), lanthanum (La), titanium (Ti), strontium (Sr), barium (Ba), fluorine (F), phosphorus (P), and sulfur (S), and

$$0.9 \leq a' \leq 1.1, \ 0.8 \leq x' < 1, \ 0 < y' < 0.2, \ 0 < z' < 0.2, \ and \ 0 \leq w' \leq 0.1.$$

15. The positive electrode material of claim 14, wherein the first positive electrode active material has an average particle diameter $D_{50}$ of a secondary particle of 1 um to 8 um, and
the second positive electrode active material has an average particle diameter $D_{50}$ of a secondary particle of greater than 8 um to 20 $\mu$m or less.

16. The positive electrode material of claim 14, wherein, in Formula 3, $0.85 \leq x' < 1$, $0 < y' \leq 0.1$, $0 < z' \leq 0.1$, and $0 \leq w' \leq 0.1$.

17. A positive electrode comprising the positive electrode material of claim 14.

18. A lithium secondary battery comprising the positive electrode of claim 17, a negative electrode, a separator disposed between the positive electrode and the negative electrode, and an electrolyte.

[FIG. 1]

[FIG. 2]

[FIG. 3]

[FIG. 4]

[FIG. 5]

[FIG. 6]

## INTERNATIONAL SEARCH REPORT

| | International application No. |
|---|---|
| | **PCT/KR2021/019756** |

**A. CLASSIFICATION OF SUBJECT MATTER**

**H01M 4/525**(2010.01)i; **H01M 4/505**(2010.01)i; **H01M 10/052**(2010.01)i; **C01G 53/00**(2006.01)i

According to International Patent Classification (IPC) or to both national classification and IPC

**B. FIELDS SEARCHED**

Minimum documentation searched (classification system followed by classification symbols)

H01M 4/525(2010.01); H01M 10/052(2010.01); H01M 10/0525(2010.01); H01M 4/485(2010.01); H01M 4/505(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 복합전이금속산화물(lithium complex transition metal oxide), 2차입자 (secondary particle), 1차 입자(primary particle), 평균입경(average diameter), 바이모달(bi-modal), 양극 활물질(positive electrode active material)

**C. DOCUMENTS CONSIDERED TO BE RELEVANT**

| Category* | Citation of document, with indication, where appropriate, of the relevant passages | Relevant to claim No. |
|---|---|---|
| X | KR 10-2018-0010123 A (SAMSUNG SDI CO., LTD.) 30 January 2018 (2018-01-30)<br>See claims 1-14; and paragraphs [0078] and [0127]-[0128]. | 1-3,7-8,10-11 |
| Y | | 6,9,12-18 |
| A | | 4-5 |
| Y | KR 10-2020-0070650 A (LG CHEM, LTD.) 18 June 2020 (2020-06-18)<br>See abstract; claims 1-9; and paragraphs [0083] and [0128]-[0129]. | 6,12-18 |
| Y | KR 10-2020-0001893 A (LG CHEM, LTD.) 07 January 2020 (2020-01-07)<br>See claim 8. | 9 |
| A | KR 10-2020-0047116 A (LG CHEM, LTD.) 07 May 2020 (2020-05-07)<br>See entire document. | 1-18 |

☑ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **30 March 2022** | **31 March 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**

| International application No. |
| --- |
| **PCT/KR2021/019756** |

**C.    DOCUMENTS CONSIDERED TO BE RELEVANT**

| Category* | Citation of document, with indication, where appropriate, of the relevant passages | Relevant to claim No. |
| --- | --- | --- |
| A | KR 10-2020-0064799 A (POSCO et al.) 08 June 2020 (2020-06-08)<br>See entire document. | 1-18 |

Form PCT/ISA/210 (second sheet) (July 2019)

**INTERNATIONAL SEARCH REPORT**
Information on patent family members

International application No.

**PCT/KR2021/019756**

| Patent document cited in search report | | | Publication date (day/month/year) | Patent family member(s) | | | Publication date (day/month/year) |
|---|---|---|---|---|---|---|---|
| KR | 10-2018-0010123 | A | 30 January 2018 | CN | 107644982 | A | 30 January 2018 |
| | | | | CN | 107644982 | B | 11 May 2021 |
| | | | | JP | 2020-064849 | A | 23 April 2020 |
| | | | | KR | 10-2307908 | B1 | 05 October 2021 |
| KR | 10-2020-0070650 | A | 18 June 2020 | CN | 113169320 | A | 23 July 2021 |
| | | | | EP | 3869590 | A1 | 25 August 2021 |
| | | | | EP | 3869590 | A4 | 19 January 2022 |
| | | | | JP | 2022-508147 | A | 19 January 2022 |
| | | | | US | 2022-0059832 | A1 | 24 February 2022 |
| | | | | WO | 2020-122497 | A1 | 18 June 2020 |
| KR | 10-2020-0001893 | A | 07 January 2020 | CN | 112106235 | A | 18 December 2020 |
| | | | | EP | 3780174 | A1 | 17 February 2021 |
| | | | | EP | 3780174 | A4 | 09 June 2021 |
| | | | | JP | 2021-523529 | A | 02 September 2021 |
| | | | | KR | 10-2288296 | B1 | 10 August 2021 |
| | | | | US | 2021-0218021 | A1 | 15 July 2021 |
| | | | | WO | 2020-004988 | A1 | 02 January 2020 |
| KR | 10-2020-0047116 | A | 07 May 2020 | CN | 112840486 | A | 25 May 2021 |
| | | | | EP | 3843181 | A1 | 30 June 2021 |
| | | | | EP | 3843181 | A4 | 17 November 2021 |
| | | | | JP | 2022-501789 | A | 06 January 2022 |
| | | | | US | 2022-0037658 | A1 | 03 February 2022 |
| | | | | WO | 2020-085731 | A1 | 30 April 2020 |
| KR | 10-2020-0064799 | A | 08 June 2020 | KR | 10-2178808 | B1 | 13 November 2020 |

Form PCT/ISA/210 (patent family annex) (July 2019)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020200181726
- KR 1020200047116